# EUROPÄISCHE PATENTSCHRIFT

(11) **EP 0 807 225 B1**
(45) Veröffentlichungstag und Bekanntmachung des Hinweises auf die Patenterteilung: **26.08.1998**
(21) Anmeldenummer: 96901772.2
(22) Anmeldetag: 27.01.1996
(51) Int. Cl.: F16P 5/00, B64C 13/28, F16B 21/16

(54) **LINEARANTRIEB FÜR DIE VERSTELLUNG EINES ELEMENTES, INSBESONDERE EINES FLÜGELELEMENTES AN EINEM FLUGZEUG**
LINEAR DRIVE FOR DISPLACING A COMPONENT, IN PARTICULAR AN AIRCRAFT WING COMPONENT
COMMANDE LINEAIRE SERVANT A CHANGER LA POSITION D'UN ORGANE, EN PARTICULIER UN ELEMENT D'AILE D'AVION

(30) Priorität: 01.02.1995 DE 19503051
(43) Veröffentlichungstag der Anmeldung: 19.11.1997
(73) Patentinhaber: ZF FRIEDRICHSHAFEN Aktiengesellschaft, 88038 Friedrichshafen (DE)
(72) Erfinder: FISCHER, Manfred, D-88677 Markdorf (DE)
(86) Internationale Anmeldenummer: EP9600332
(87) Internationale Veröffentlichungsnummer: WO9624005

(56) Entgegenhaltungen:
- DE-C- 3 910 887
- US-A- 3 215 383

## Beschreibung

Die Erfindung betrifft einen Linearantrieb für die Verstellung eines Elementes, insbesondere eines Flügelelementes an einem Flugzeug, nach der im Oberbegriff von Anspruch 1 näher definierten Art.

Linearantriebe, mit denen Zug- und/oder Druckkräfte linear übertragen werden, werden auf den verschiedensten Gebieten eingesetzt. Ein mögliches Einsatzgebiet sind Flügelelemente an einem Flugzeug, die z. B. bei Start und Landung zur Vergrößerung des Auftriebes bei geringen Geschwindigkeiten verschoben werden und die sowohl die Fläche des Tragflügels vergrößern als auch die Aerodynamik verändern. Für den Antrieb dieser Flügelelemente, wie z. B. Flügelklappen, sind Kurbelgetriebe oder Linearantriebe im Einsatz. Tritt nun an der Führung eines Flügelelementes ein Blockieren ein, so werden extrem hohe Kräfte erzeugt, die in der Flugzeugstruktur aufgenommen werden müssen. Da die Dimensionierung der Flugzeugstruktur durch die mögliche maximale Kraft bestimmt wird, erhöht sich damit auch das Gewicht.

Bei bekannten Ausführungen in der Praxis wird die eingeleitete Kraft indirekt dadurch begrenzt, daß das Drehmoment am Antriebsstrang limitiert wird. Der Nachteil dieser Begrenzung ist jedoch, daß sowohl durch die Kinematik wie auch durch Wirkungsgradstreuungen die Kraft mehr als das Doppelte des erforderlichen Wertes beträgt.

In der WO 90/09921 ist eine Antriebseinrichtung mit einem variablen Drehmoment-Begrenzungssystem beschrieben. Nachteilig dabei ist jedoch, daß bei dieser vorbekannten Lösung die Begrenzung relativ ungenau ist bzw. deutliche Streuungen auftreten können. Darüber hinaus ist diese Einrichtung relativ schwergewichtig.

Zur Kraftbegrenzung sind auch aus der Praxis Einrichtungen oder Glieder im Kraftfluß bekannt, die bei Überschreitung einer vorgegebenen Kraft zerstört werden und damit eine Art Sollbruchstelle darstellen. Nachteilig dabei ist jedoch, daß damit die Kraftübertragung beendet ist und das Teil vor einer erneuten Verwendung entsprechend repariert werden muß.

Der vorliegenden Erfindung liegt daher die Aufgabe zugrunde, einen Linearantrieb der eingangs erwähnten Art zu schaffen, bei dem eine Kraftbegrenzung ohne Zerstörung eines Bauteiles auftritt und bei dem keine nachteilige Gewichtserhöhung auftritt bzw. eine Strukturverstärkung vorgenommen werden muß.

Erfindungsgemäß wird diese Aufgabe durch die im kennzeichnenden Teil von Anspruch 1 genannten Merkmale gelöst.

Bei Normalbetrieb erfolgt die Kraftübertragung von dem Freilaufaußenteil über die Klemmkörper auf das Innenteil und dann weiter über das Federpaket zu dem Ausgangsteil. Beim Überschreiten eines vorgegebenen Einstellwertes wird dann das Federpaket derart zusammengedrückt, daß eine Relativbewegung zwischen Freilaufaußenteil und dem Ausgangsteil auftritt, die eine Entkoppelung der Klemmkörper bewirkt. Durch diese Einrichtung wird ein gezieltes und genaues Entkoppeln der Kraftübertragung ohne Zerstörung eines Bauteiles erreicht.

Durch eine geeignete Ausbildung des auf diese Weise geschaffenen Linearfreilaufes kann dieser in beide Richtungen wirken, d. h. daß sowohl eine Kraftbegrenzung bei Zug als auch bei Druck erzeugt werden kann.

Aus den Unteransprüchen und dem nachfolgend anhand der Zeichnung prinzipmäßig beschriebenen Ausführungsbeispiel sind vorteilhafte Weiterbildungen und Ausgestaltungen der Erfindung ersichtlich. Es zeigen:
- Fig. 1: einen Längsschnitt durch den erfindungsgemäßen Linearantrieb;
- Fig. 2: einen Querschnitt durch den Freilaufkäfig nach der Linie II-II der Fig. 1;
- Fig. 3: den Linearantrieb nach der Fig. 1 im gleichen Schnitt bei Ansprechbeginn;
- Fig. 4: den Linearantrieb nach der Fig. 1 im gleichen Schnitt in maximal eingefahrener Position;
- Fig. 5: den Linearantrieb nach der Fig. 1 in maximal ausgezogener Position und
- Fig. 6: einen Längsschnitt durch einen Linearantrieb mit zwei Federpaketen.

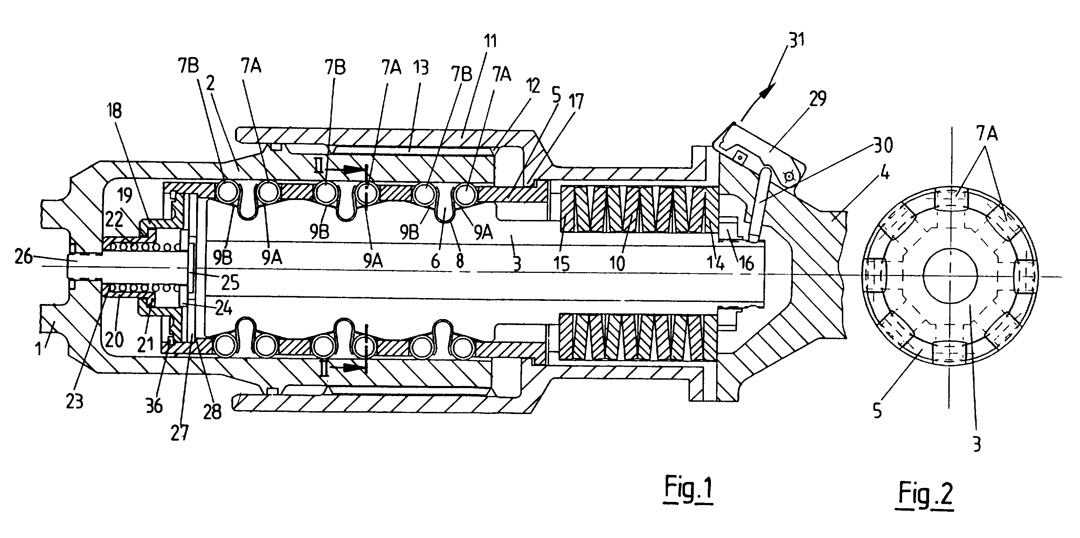

Der Linearantrieb weist ein Eingangsteil 1, ein Freilaufaußenteil 2, ein Freilaufinnenteil 3 und ein damit verbundenes Ausgangsteil 4 auf. Zwischen dem Freilaufaußenteil 2 und dem Freilaufinnenteil 3 ist ein rohrförmiger Freilaufkäfig 5 angeordnet. Der Freilaufkäfig 5 ist mit einer Vielzahl von Taschen 6 versehen, in denen jeweils zwei Klemmkörper in Form von Tonnenrollen 7A und 7B angeordnet sind, die durch eine dazwischenliegende Klemmkörpersteuerfeder 8 vorgespannt sind. Aus der Fig. 2 ist ersichtlich, daß z. B. acht Taschen 6 mit Tonnenrollen 7A gleichmäßig am Umfang des Freilaufkäfigs 5 verteilt angeordnet sind. Aus der Fig. 1 ist ersichtlich, daß mehrere Reihen von Taschen in axialer Richtung hintereinander angeordnet sind (bei dem Ausführungsbeispiel drei Reihen), wobei jeweils in einer Tasche 6 die Tonnenrollen 7A und 7B in axialer Richtung durch die dazwischenliegende Klemmkörpersteuerfeder 8 voneinander getrennt unter Vorspannung gehalten sind.

Aus der Fig. 1 ist weiterhin auch ersichtlich, daß das Freilaufinnenteil 3 schräge Rampen 9A und 9B aufweist, die sich ebenfalls in axialer Richtung erstrecken. Wie aus der Figur ersichtlich ist, sind jeder Tasche 6 einander entgegengesetzte Rampen 9A und 9B zugeordnet, wobei jeweils als Klemmkörper eine Tonnenrolle 7A bzw. 7B auf einer Rampe unter Vorspannung der dazugehörigen Klemmkörpersteuerfeder 8 liegt.

Anstatt der Tonnenrollen 7A bzw. 7B können auch andere geeignete Bauteile, wie beispielsweise Pendelrollen, Zylinderrollen oder auch Kugeln verwendet werden. Ebenso sind auch - je nach Einsatzfall - Klemmkörper mit asymmetrischen Kurven bzw. Profilen möglich.

Der Kraftfluß vom Eingangsteil 1 erfolgt über das Freilaufaußenteil 2, den Freilaufkäfig 5, den Freilaufinnenteil 3 und ein Federpaket 10 auf das Ausgangsteil 4. Mit dem Ausgangsteil 4 ist weiterhin auch eine Außenbuchse 11 verbunden. Zwischen der Außenbuchse 11 und dem Freilaufaußenteil 2 ist eine Führungseinrichtung angeordnet, die mehrere über den Umfang verteilt angeordnete Axialnuten 12 in der Außenbuchse 11 und damit zusammenarbeitende Längsrippen oder Längsstege 13 am Außenumfang des Freilaufaußenteiles 2 aufweist. Die Führungseinrichtung verhindert auch eine Verdrehung von Außenbuchse 11 gegenüber Freilaufaußenteil 2.

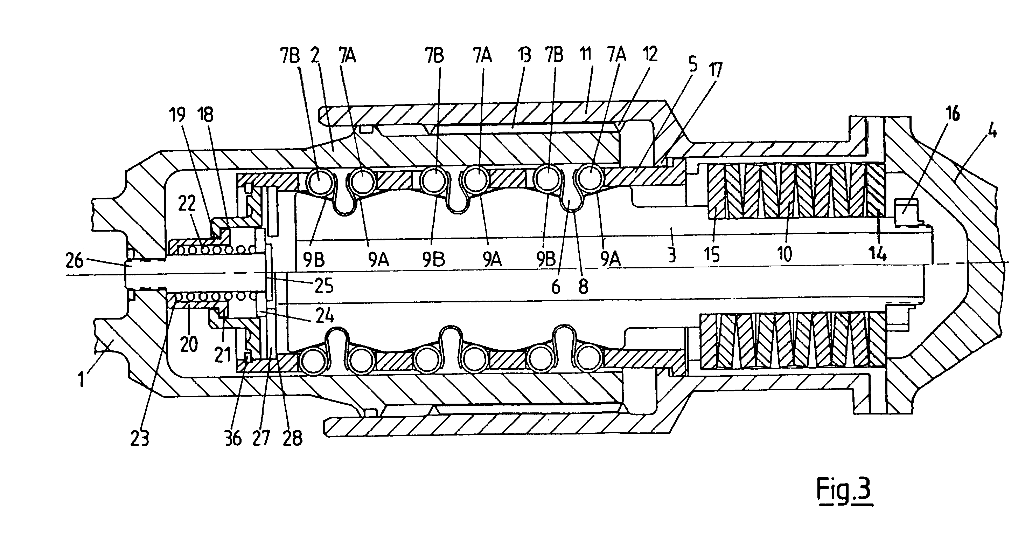

Der erfindungsgemäße Linearantrieb funktioniert auf folgende Weise:
Ausgehend von der in der Fig. 1 dargestellten Normalstellung erfolgt der Kraftfluß von dem Freilaufaußenteil 2 über die Tonnenrollen 7A als Klemmkörper und von da aus über den Freilaufinnenteil 3 und das Federpaket 10 auf das Ausgangsteil 4. Wenn die Bewegung des Ausgangsteils 4 nun behindert wird, z. B. durch Vereisung einer zu verstellenden Flügelklappe, und damit die in dem Federpaket 10 voreingestellte Kraft überschritten wird, so werden die Federn des Federpaketes 10 komprimiert. Bei dem Ausführungsbeispiel werden sie durch das Freilaufinnenteil 3 nach rechts verschoben. Auf diese Weise wird der Abstand zwischen dem Federpaket 10 und dem Freilaufkäfig 5 in axialer Richtung vergrößert (siehe Ansprechbeginn in der Fig. 3). Mit zunehmender Kraftüberschreitung und damit zunehmender Verschiebung des Freilaufinnenteiles 3 gegenüber dem Freilaufaußenteil 2 werden die sich im Einsatz befindenden Tonnenrollen 7A durch die stirnseitigen Wände der Taschen 6 bei dem Ausführungsbeispiel nach links von ihren Rampen 9A heruntergeschoben, und zwar gegen die Vorspannung der Klemmkörpersteuerfedern 8. Auf diese Weise werden die Tonnenrollen frei, der Kraftfluß wird unterbrochen und der gewünschte Freilauf wird auf diese Weise erzeugt.

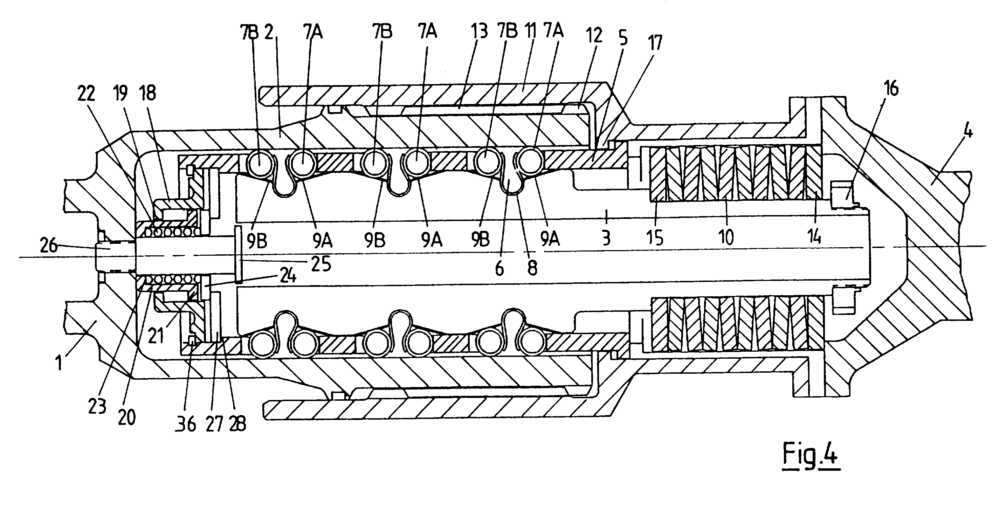

In der Fig. 4 ist die maximal eingefahrene Position dargestellt.

Der dargestellte Linearantrieb funktioniert jedoch auch in umgekehrter Richtung, d. h. bei einem Kraftfluß von rechts nach links bzw. von dem Ausgangsteil 4 in Richtung zum Eingangsteil 1. Während bei dem vorstehend beschriebenen Kraftfluß von links nach rechts dieser über einen Anschlagring 15, der an einem Anschlag des Freilaufinnenteiles 3 anlag, erfolgte, geht nun der Kraftfluß über einen Anschlagring 14, der an einer Anschlagmutter 16, die stirnseitig auf das Freilaufinnenteil 3 aufgeschraubt ist, anliegt. Bei Überschreiten einer vorgewählten Kraft wird das Federpaket 10 wiederum zusammengepreßt, und zwar diesmal über die Anschlagmutter 16. Tritt dabei wiederum eine Blockade auf, so komprimiert die Anschlagmutter 16 das Federpaket. Die Außenbuchse 11, die mit dem Ausgangsteil 4 fest verbunden ist, bleibt dabei unbeweglich. Die Außenbuchse 11 weist eine ringförmige Anschlagschulter 17 auf, an der der Freilaufkäfig 5 bei der Verschiebung anschlägt. Während der Weiterbewegung gelangen auf diese Weise die Tonnenrollen 7B außer Eingriff, denn sie werden nach rechts jeweils von den schrägen Rampen 9B heruntergezogen. Auf diese Weise wird wiederum auch bei diesem Kraftfluß der gewünschte Freilauf erreicht.

Um in den jeweiligen Endpositionen wieder eine Rückstellung bzw. Rückführung in die Normalstellung zu erreichen, muß jedoch eine besondere Einrichtung vorgesehen sein, denn in den Endpositionen würden ansonsten bei dem Versuch einer Rückführung die Tonnenrollen 7A und 7B als Klemmkörper sofort wieder in Eingriff geraten, so daß keine Rückführung mehr in die Normalstellung möglich wäre.

Zu diesem Zwecke ist nun eine Federeinrichtung vorgesehen, die den Freilaufkäfig in seiner Normalposition federzentriert hält bzw. in diese Position zurückbringt.

Die Federeinrichtung weist einen Außenring 18 mit einer nach innen ragenden Ringnase 19 und einen Innenring 20 mit einer nach außen ragenden Ringnase 21 auf, die die Ringnase 19 hintergreift. Eine Steuerfeder 22 ist zwischen einer Stirnwand 23 und einem Anschlagring 24 gespannt. Der Anschlagring 24 liegt unter Vorspannung durch die Steuerfeder 22 an einem stirnseitigen Bund 25 eines Bolzens 26 an und kann über einen Zwischenring 27 auf einen ringförmigen Stirnanschlag des Freilaufkäfigs 5 gedrückt werden. Ein Sprengring 36 bildet auf der von dem Freilaufkäfig 5 abgewandten Seite eine Fixierung für den Außenring 18.

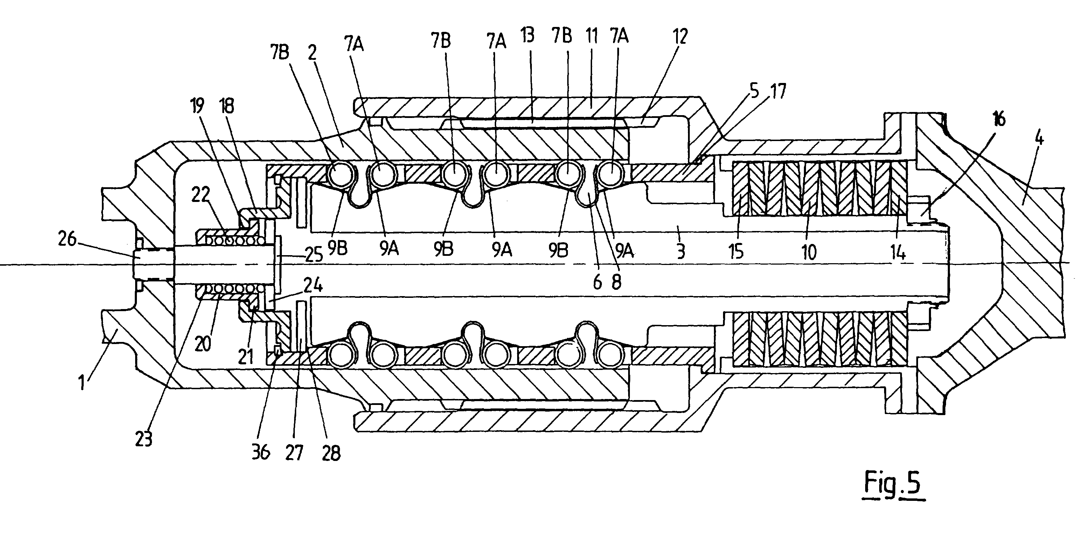

Wie aus der Fig. 5 ersichtlich ist, hat der Innenring 20 von dem Eingangsteil 1 abgehoben bzw. liegt auf Abstand dazu. In dieser Position muß zuerst einmal der Innenring 20 durch die Steuerfeder 22 wieder auf einen stirnseitigen Anschlag an das Eingangsteil 1 gebracht werden. Auf diese Weise wird dann der Freilaufkäfig 5 mit seinen Klemmkörpern wieder zentriert.

Bei der maximal eingefahrenen Position gemäß Fig. 4 hat der Außenring 18 von der Ringnase 21 des Innenringes 20 abgehoben. In diesem Falle wird der Freilaufkäfig 5 durch die Steuerfeder 22 wieder nach rechts bis zur Normalstellung zentriert.

Dies bedeutet, daß im Unterschied zum Stand der Technik, wobei z. B. Sollbruchstellen vorhanden sind, gegebenenfalls mehrfach versucht werden kann, ob noch eine Blockade vorhanden ist oder nicht, denn dabei treten keine Brüche oder Deformationen von Teilen auf.

Bei der erfindungsgemäßen Lösung wird bei einer Überlastung ein deutlicher Weg bzw. eine deutliche Verschiebung erreicht, die lediglich aus Gründen eines Platzbedarfes beschränkt werden muß. Diese deutliche Verschiebung kann damit auch zur Messung des Verschiebeweges über entsprechende Meßglieder verwendet werden. So kann z. B. eine Auslösung der Kraftbegrenzung bzw. der Entkoppelungseinrichtung nach außen durch eine verstellbare Klappe 29 angezeigt und gegebenenfalls auch über Steuerglieder weitergemeldet werden. Diese Einrichtung ist nur in der Fig. 1 prinzipmäßig dargestellt. So kann z. B. hierfür eine mit dem Freilaufinnenteil 3 verbundene Schubstange 30 vorgesehen sein, die bei einer Verschiebung des Freilaufinnenteiles 3 die Klappe 29 in Pfeilrichtung 31 aufstellt. Auf diese Weise ist es möglich, bei einem Linearantrieb, der mehrere Elemente betätigt, zu erkennen, bei welchem Element die Kraftüberschreitung auftritt.

Durch diese Anzeigeeinrichtung, oder auch durch eine andere Einrichtung, kann auch eine Meldung dahingehend erfolgen, daß über entsprechende Steuerglieder eine Abschalteinrichtung für den Antrieb betätigt wird.

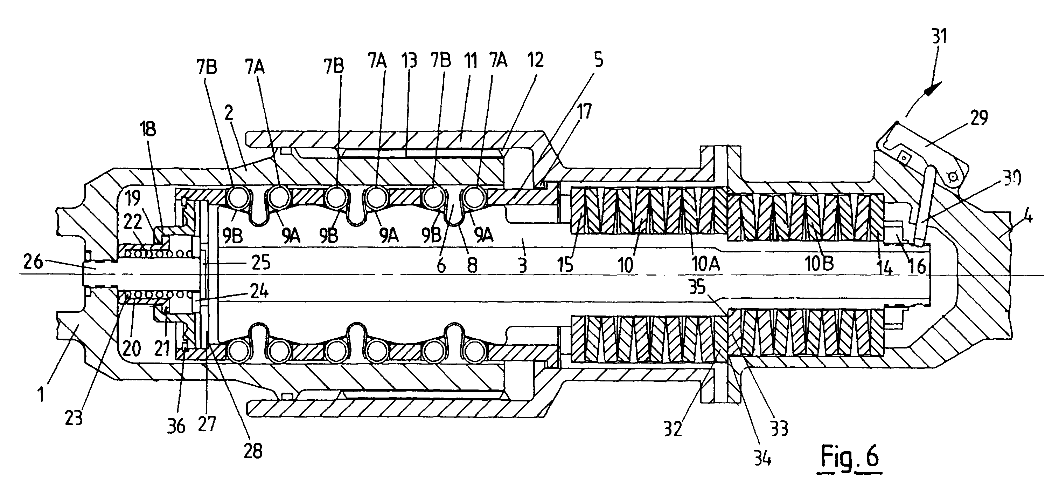

In der Fig. 6 ist eine Weiterbildung des vorstehend beschriebenen Ausführungsbeispieles dargestellt. Grundsätzlich funktioniert der in dieser Figur dargestellte Linearantrieb in gleicher Weise, weshalb hierfür auch die gleichen Bezugszeichen verwendet worden sind und nachfolgend auf deren Funktionsweise nicht näher eingegangen wird.

Der einzige Unterschied zu dem vorstehend beschriebenen Ausführungsbeispiel besteht darin, daß zwei Federpakete 10A und 10B vorgesehen sind, die unterschiedliche Federvorspannungen aufweisen. Bei einem Kraftfluß von rechts nach links sind die beiden Federpakete 10A und 10B dabei hintereinander geschaltet, während in der umgekehrten Kraftflußrichtung die beiden Federpakete 10A und 10B parallel geschaltet sind. Die Hintereinanderschaltung der Federpakete ist dabei weicher als die Parallelschaltung, womit eine asymmetrische Kennlinie in den beiden Kraftflußrichtungen erreicht wird. Ursächlich für diese unterschiedliche Kennlinie sind zwei weitere Anlaufringe 32 und 33, die zusätzlich zu den Anschlagringen 14 und 15 vorgesehen sind und die sich zwischen den beiden Federpaketen 10A und 10B befinden. Dabei liegt der Anlaufring 33 unter Federvorspannung an einem Ringabsatz 35 des Freilaufinnenteiles 3 an, während der Anschlagring 32 an einem Ringabsatz 34 des Ausgangsteiles 4 anliegt.

Im allgemeinen wird man das Freilaufaußenteil 2, das Freilaufinnenteil 3 und den Freilaufkäfig 5 im Querschnitt kreisförmig ausbilden. Selbstverständlich sind jedoch auch andere Querschnittsformen, wie z. B. ein Vieleckquerschnitt, ebenfalls möglich. Ebenso wird man im allgemeinen die schrägen Rampen 9A und 9B im Freilaufinnenteil vorsehen, aber im Rahmen der Erfindung ist auch die umgekehrte Ausgestaltung möglich, d. h., daß die Rampen im Freilaufaußenteil angeordnet sind.

### Bezugszeichen

- 1: Eingangsteil
- 2: Freilaufaußenteil
- 3: Freilaufinnenteil
- 4: Ausgangsteil
- 5: Freilaufkäfig
- 6: Taschen
- 7: Tonnenrollen
- 8: Klemmkörpersteuerfeder
- 9: schräge Rampen
- 10: Federpaket
- 11: Außenbuchse
- 12: Axialnuten
- 13: Längsrippen bzw. -stege
- 14: Anschlagring
- 15: Anschlagring
- 16: Anschlagmutter
- 17: Anschlagschulter
- 18: Außenring
- 19: Ringnase
- 20: Innenring
- 21: Ringnase
- 22: Steuerfeder
- 23: Stirnwand
- 24: Anschlagring
- 25: stirnseitiger Bund
- 26: Bolzen
- 27: Zwischenring
- 28: -
- 29: verstellbare Klappe
- 30: Schubstange
- 31: Pfeilrichtung
- 32: weitere Anlaufringe
- 33: weitere Anlaufringe
- 34: Ringabsatz
- 35: Ringabsatz
- 36: Sprengring

## Patentansprüche

1. Linearantrieb für die Verstellung eines Elementes, insbesondere eines Flügelelementes an einem Flugzeug, mit einem antriebsseitigen Eingangsteil und einem abtriebsseitigen Ausgangsteil, wobei zwischen Eingangsteil und Ausgangsteil eine Entkoppelung vorgesehen ist, die bei Überschreiten einer vorgegebenen Kraft die kraft- oder formschlüssige Verbindung zwischen Eingangsteil und Ausgangsteil unterbricht, dadurch **gekennzeichnet**, daß das Eingangsteil (1) ein Freilaufaußenteil (2) aufweist, das über ein Freilaufinnenteil (3) mit dem Ausgangsteil (4) verbunden ist, wobei zwischen dem Freilaufaußenteil (2) und dem Freilaufinnenteil (3) ein rohrförmiger Freilaufkäfig (5) mit einer Vielzahl von Taschen (6) angeordnet ist, in denen in axialer Richtung verschiebbar durch Klemmkörpersteuerfedern (8) vorgespannte Klemmkörper (7A, 7B) gelagert sind, wobei den Taschen (6) in axialer Richtung verlaufende schräge Rampen (9A, 9B) zugeordnet sind, die im Freilaufaußenteil (2) oder im Freilaufinnenteil (3) angeordnet sind, und wobei zwischen dem Freilaufinnenteil (3) und dem Ausgangsteil (4) ein eine axiale Vorspannung erzeugendes Federpaket (10) angeordnet ist.

2. Linearantrieb nach Anspruch 1, dadurch **gekennzeichnet**, daß der Freilaufkäfig (5) durch eine Federeinrichtung (18-26) in Normalstellung zentriert ist.

3. Linearantrieb nach Anspruch 1 oder 2, dadurch **gekennzeichnet**, daß jede Tasche (6) mit axial spiegelbildlich zueinander angeordneten Rampen (9A, 9B) versehen ist.

4. Linearantrieb nach Anspruch 1, 2 oder 3, dadurch **gekennzeichnet**, daß die Klemmkörper Tonnen-, Zylinder- oder Pendelrollen (7A, 7B) sind.

5. Linearantrieb nach Anspruch 1, 2 oder 3, dadurch **gekennzeichnet**, daß die Klemmkörper Kugeln sind.

6. Linearantrieb nach Anspruch 1, 2, 3, 4 oder 5, dadurch **gekennzeichnet**, daß zwischen dem Freilaufaußenteil (2) und dem Ausgangsteil (4) oder einem mit dem Ausgangsteil verbundenen Teil eine Führungseinrichtung (12, 13) angeordnet ist.

7. Linearantrieb nach Anspruch 6, dadurch **gekennzeichnet**, daß die Führungseinrichtung eine Profilverzahnung oder Axialnuten (12) mit darin geführten Längsrippen (13) ist.

8. Linearantrieb nach einem der Ansprüche 1 bis 7, dadurch **gekennzeichnet**, daß zwei Federpakete (10A, 10B) mit unterschiedlichen Federvorspannungen vorgesehen sind, die derart angeordnet sind, daß sich unterschiedliche Vorspannungen bezüglich Druck oder Zug ergeben.

9. Linearantrieb nach einem der Ansprüche 1 bis 8, dadurch **gekennzeichnet**, daß die Verschiebung zwischen Freilaufaußenteil (2) und Freilaufinnenteil (3) bzw. zwischen Eingangsteil (1) und Ausgangsteil (4) durch Meßglieder (29, 30, 31) erfaß- und anzeigbar ist.

10. Linearantrieb nach Anspruch 9, dadurch **gekennzeichnet**, daß eine Abschalteinrichtung für den Antrieb vorgesehen ist.

## Claims

1. Linear drive for adjusting an element, in particular an aerofoil element on an aircraft, the said linear drive having an input part on the driving side and an output part on the driven side, there being provided, between the input part and the output part, an uncoupling system which interrupts the force-locking or form-locking connection between the input part and output part when a predetermined force is exceeded, **characterised in that** the input part (1) has a freewheeling outer part (2) which is connected to the output part (4) via a freewheeling inner part (3), there being disposed, between the freewheeling outer part (2) and the freewheeling inner part (3), a tubular freewheeling cage (5) with a multiplicity of pockets (6) in which there are mounted clamping bodies (7A, 7B) which are pre-tensioned by clamping body control springs (8) so as to be displaceable in the axial direction, there being associated with the pockets (6) oblique ramps (9A, 9B) which extend in the axial direction and are disposed in the freewheeling outer part (2) or in the freewheeling inner part (3), and there being disposed, between the freewheeling inner part (3) and the output part (4), a spring set (10) which generates an axial pre-tension.

2. Linear drive according to claim 1, **characterised in that** the freewheeling cage (5) is centred in the normal position by a spring arrangement (18 - 26).

3. Linear drive according to claim 1 or 2, **characterised in that** each pocket (6) is provided with ramps (9A, 9B) which are disposed in an axially mirror-inverted manner in relation to one another.

4. Linear drive according to claim 1, 2 or 3, **characterised in that** the clamping bodies are barrel-shaped, cylindrical or self-aligning rollers (7A, 7B).

5. Linear drive according to claim 1, 2 or 3, **characterised in that** the clamping bodies are balls.

6. Linear drive according to claim 1, 2, 3, 4 or 5, **characterised in that** a guide arrangement (12, 13) is disposed between the freewheeling outer part (2) and the output part (4) or a part connected to the output part.

7. Linear drive according to claim 6, **characterised in that** the guide arrangement is a profiled toothing system or axial grooves (12) with longitudinal ribs (13) guided therein.

8. Linear drive according to one of claims 1 to 7, **characterised in that** two spring sets (10A, 10B) with different spring pre-tensions are provided, which are disposed in such a way that different pre-tensions in respect of compression or tension are produced.

9. Linear drive according to one of claims 1 to 8, **characterised in that** the displacement between the freewheeling outer part (2) and the freewheeling inner part (3), or between the input part (1) and the output part (4), can be detected and indicated by measuring members (29, 30, 31).

10. Linear drive according to claim 9 **characterised in that** a switching-off arrangement for the drive is provided.

## Revendications

1. Entraînement linéaire pour l'ajustage d'un élément, notamment d'un élément d'aile à un avion, comportant un élément d'entrée côté entraînement et un élément de sortie côté sortie, dans lequel est prévu un découplage entre l'élément d'entrée et l'élément de sortie, qui interrompt la liaison adhérente ou sans glissement entre l'élément d'entrée et l'élément de sortie en cas de dépassement d'une force prédéfinie, **caractérisé** en ce que l'élément d'entrée (1) comporte une partie externe de course libre (2) reliée par l'intermédiaire d'une partie interne de course libre (3) à l'élément de sortie (4), dans lequel, entre la partie externe de course libre (2) et la partie interne de course libre (3) est agencée une cage de course libre (5) en forme de tube comportant une multitude de poches (6) dans lesquelles sont logés des corps de serrage (7A, 7B) axialement mobiles et soumis à une prétension au moyen de ressorts de commande de corps de serrage (8), des rampes (9A, 9B) inclinées dans le sens axial étant adjointes aux poches (6), ces rampes étant agencées dans la partie externe de course libre (2) ou dans la partie interne de course libre (3), et dans lequel un bloc-ressort (10) produisant une prétension axiale est disposé entre la partie interne de course libre (3) et l'élément de sortie (4).

2. Entraînement linéaire selon la revendication 1, **caractérisé** en ce que la cage de course libre (5) est centrée en position normale par un dispositif à ressorts (18 - 26).

3. Entraînement linéaire selon la revendication 1 ou 2, **caractérisé** en ce que chaque poche (6) est pourvue de rampes (9A, 9B) disposées axialement inversées l'une par rapport à l'autre.

4. Entraînement linéaire selon la revendication 1, 2 ou 3, **caractérisé** en ce que les corps de serrage sont des rouleaux en forme de tonneaux, de cylindres ou des rouleaux articulés (7A, 7B).

5. Entraînement linéaire selon la revendication 1, 2 ou 3, **caractérisé** en ce que les corps de serrage sont des sphères.

6. Entraînement linéaire selon la revendication 1, 2, 3, 4 ou 5, **caractérisé** en ce qu'entre la partie externe de course libre (2) et l'élément de sortie (4) ou un élément relié à l'élément de sortie est disposé un dispositif de guidage (12, 13).

7. Entraînement linéaire selon la revendication 6, **caractérisé** en ce que le dispositif de guidage est une denture profilée ou des rainures axiales (12) dans lesquelles sont guidées des nervures longitudinales (13).

8. Entraînement linéaire selon l'une des revendications de 1 à 7, **caractérisé** en ce que deux blocs-ressorts (10A, 10B) ayant des tensions de ressort différentes sont prévus et sont disposés de telle façon qu'il en résultent différentes prétensions de traction ou de poussée.

9. Entraînement linéaire selon l'une des revendications 1 à 8, **caractérisé** en ce que le déplacement entre la partie externe de course libre (2) et la partie interne de course libre (3), respectivement entre l'élément d'entrée (1) et l'élément de sortie (4) peut être capté et visualisé au moyen de mesures (29, 30, 31).

10. Entraînement linéaire selon la revendication 9, **caractérisé** en ce qu'un dispositif de coupure est prévu pour l'entraînement.
